# EUROPÄISCHE PATENTANMELDUNG

(11) **EP 1 605 572 A1**
(43) Veröffentlichungstag der Anmeldung: **14.12.2005**
(21) Anmeldenummer: 05012135.9
(22) Anmeldetag: 06.06.2005
(51) Int. Cl.: H02J 7/04

(54) **Batterieladevorrichtung mit primärseitiger Ladezustandserfassung**

(30) Priorität: 08.06.2004 DE 102004027833
(71) Anmelder: Friwo Geraetebau GmbH, 48342 Ostbevern (DE)
(72) Erfinder: Bothe, Michael, 48346 Münster (DE); Schröder gen. Berghegger, Ralf, 49219 Glandorf (DE); Breuch, Georg, 48268 Greven (DE)
(74) Vertreter: Grünecker, Kinkeldey, Stockmair & Schwanhäusser Anwaltssozietät

(57) **Zusammenfassung**

Die vorliegende Erfindung bezieht sich auf eine Batterieladevorrichtung zum Aufladen einer Batterie. Insbesondere bezieht sich die vorliegende Erfindung auf eine Batterieladevorrichtung, die ein primärseitig gesteuertes Schaltnetzteil sowie eine Ladeüberwachungsschaltung zum Überwachen des Ladezustands der Batterie aufweist. Um eine verbesserte Batterieladevorrichtung anzugeben, die bei Reduzierung der Schaltungskomplexität, der Gerätekosten und der Baugröße eine sichere und zuverlässige Aufladung von Batterien ermöglicht, ist erfindungsgemäß die Ladeüberwachungsschaltung in dem primärseitigen Schaltkreis der Batterieladevorrichtung angeordnet.

## Beschreibung

Die vorliegende Erfindung bezieht sich auf eine Batterieladevorrichtung zum Aufladen einer Batterie. Insbesondere bezieht sich die vorliegende Erfindung auf eine Batterieladevorrichtung, die ein primärseitig gesteuertes Schaltnetzteil sowie eine Ladeüberwachungsschaltung zum Überwachen des Ladezustands der Batterie aufweist.

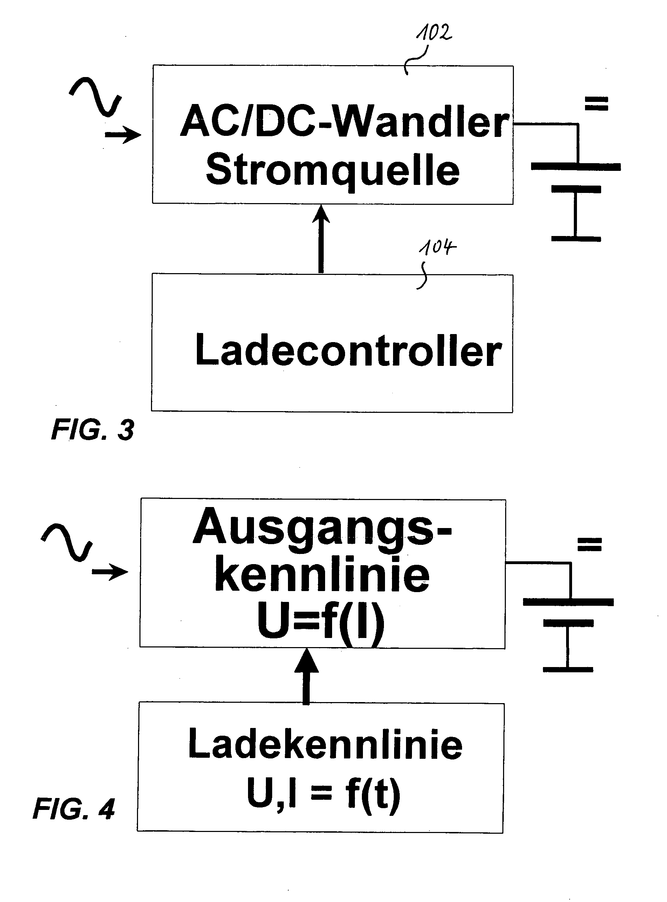

Wie beispielsweise in Figur 3 gezeigt, weist ein bekanntes Ladegerät einen AC/DC-Wandler 102 auf, der beispielsweise durch einen Sperrwandler gebildet ist. Der Sperrwandler wird als Stromquelle geschaltet und liefert einen Konstantstrom zur Ladung von Batterien, die im folgenden wiederaufladbare Batterien, Akkumulatoren sowie Batteriepacks oder Akkupacks bezeichnen sollen.

Wiederaufladbare Batterien, wie beispielsweise Nickel-Cadmium-Batterien, werden häufig zur Energieversorgung portabler elektronischer Geräte verwendet. Üblicherweise wird während des Ladevorgangs einer derartigen Batterie das elektrische Potential zwischen den positiven und negativen Elektroden der Batterie detektiert. Wenn das gemessene Potential steigt, wird die Batterie normal aufgeladen, wenn dagegen das gemessene Potential fällt, wird der Batterieladevorgang beendet, weil die Batterie voll aufgeladen ist.

Weiterhin ist bekannt, dass bestimmte Batterien, wie die sogenannten Nickelmetallhydrid-Batterien, eine große Wärmemenge während des Ladevorgangs produzieren. Würde man derartige Nickelmetallhydrid-Batterien aufladen, bis das Potential zwischen den positiven und den negativen Elektroden anfängt abzufallen, so würde eine zu hohe Erwärmung erfolgen.

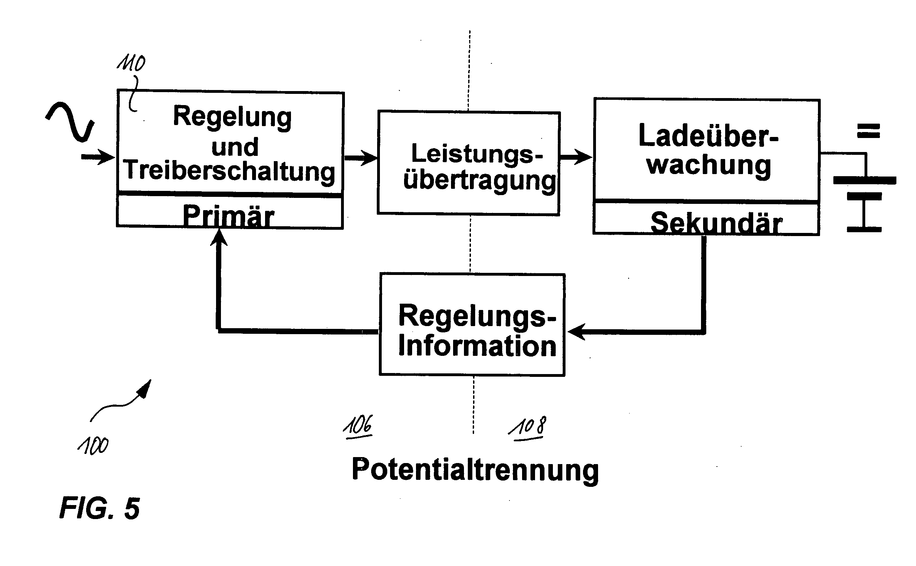

Daher werden häufig an der Nickelmetallhydrid-Batterie Temperatursensoren angebracht, um eine Temperaturüberwachung zu ermöglichen. Sowohl die Information über die Spannung an der Batterie wie auch über die gemessene Temperatur wird von einem Ladecontroller 104 weiterverarbeitet, sodass der Ladevorgang entsprechend gesteuert werden kann. Der Ladecontroller 104 führt das gesamte Lademanagement, wie z.B. eine Reduzierung des Ladestroms auf einen Erhaltungsladestrom nach dem Erkennen der Vollladung, und die Auswertung verschiedener Informationen, beispielsweise der Ladezeit, der auftretenden Temperatur oder der Zellenspannung an der Batterie durch. Dabei stellt, wie in Figur 4 schematisch dargestellt, der Sperrwandler 102 eine entsprechende Ausgangscharakteristik, wie z.B. eine I/U-Kennlinie, zur Verfügung. Der Ladecontroller 104 steuert diese Kennlinie zeitabhängig und bildet so eine Ladekennlinie U,I = f(t) ab.

Figur 5 zeigt ein Blockschaltbild einer Batterieladevorrichtung 100 gemäß dem Stand der Technik. Wie aus der Figur erkennbar, weist das Gerät eine Primärseite 106, die mit der Netzspannung verbunden ist, und eine Sekundärseite 108, die mit der Batterie verbunden ist, auf. Primärseite 106 und Sekundärseite 108 müssen galvanisch voneinander getrennt sein.

Verwendet man in der Batterieladevorrichtung 100 einen Sperrwandler mit einer Regelschaltung 110 wie in der deutschen Offenlegungsschrift DE 100 18 229 A1 gezeigt, so ist die Regelschaltung 110 auf der Primärseite 106 angeordnet und die Ausgangskennlinie wird lediglich aus der Regelung des primärseitigen Stromes und einer aus einer Hilfswicklung entnommenen, der Sekundärspannung proportionalen Spannung, abgeleitet. Wie in Figur 5 dargestellt, ist jedoch bei den bekannten Anordnungen die erforderliche Ladeüberwachungsschaltung (der Ladecontroller der Figur 3) 104 auf der Sekundärseite 108 angeordnet und steuert über einen Optokoppler den Ladevorgang. Für die erforderliche Messung der Batterieparameter kommt heute vielfach ein Mikrocontroller oder ein sogenanntes Batterie-Management-IC zum Einsatz.

Die in Figur 5 gezeigte Lösung hat aber den Nachteil, dass die benötigten Bausteine eine erhebliche Schaltungsperipherie erfordern, die entsprechende Leiterplattenfläche benötigt, und vergleichsweise teuer ist. Darüber hinaus erhöht der Schaltungsaufwand auch den benötigten Platz und damit die geometrischen Abmessungen de Batterieladevorrichtung.

Daher liegt der vorliegenden Erfindung die Aufgabe zugrunde, eine verbesserte Batterieladevorrichtung anzugeben, die bei Reduzierung der Schaltungskomplexität, der Gerätekosten und der Baugröße eine sichere und zuverlässige Aufladung von Batterien ermöglicht.

Diese Aufgabe wird durch den Gegenstand des Patentanspruchs 1 gelöst. Vorteilhafte Weiterbildungen der vorliegenden Erfindung sind Gegenstand der Unteransprüche.

Die vorliegende Erfindung basiert auf dem Gedanken, die Ladeüberwachung mit in die primärseitige Regelungs- und Treiberschaltung eines primärseitig gesteuerten Schaltnetzteils zu integrieren. Auf diese Weise kann auf eine separate sekundärseitige Ladeschaltung verzichtet werden und es werden sowohl die Anzahl und Komplexität der Bauteile, wie auch die geometrischen Abmessungen der Batterieladevorrichtung in vorteilhafter Weise reduziert. Weiterhin muss keine Temperaturüberwachung an der Batterie selbst angebracht sein, wodurch die Komplexität und der Preis der Batterien vermindert werden können.

Gemäß einer vorteilhaften Weiterbildung der vorliegenden Erfindung weist die Ladeüberwachungsschaltung eine Temperaturerfassungseinrichtung zum Erfassen der Temperatur der Batterie auf. Somit kann auf der Basis der Temperaturinformation die Leistungsübertragung eingestellt werden. Dies bietet den Vorteil, dass eine zu große Erwärmung vermieden wird, ohne dabei an der Batterie einen Temperaturdetektor, wie beispielsweise einen Thermistor, vorsehen zu müssen. Weiterhin müssen die Batterie und die Batterieladevorrichtung keine Anschlüsse zum Übertragen von Temperaturinformation von der Batterie zur Batterieladevorrichtung aufweisen, sodass sowohl die Batterie wie auch die Batterieladevorrichtung in ihrer Struktur vereinfacht werden können.

Gemäß einer vorteilhaften Weiterbildung der vorliegenden Erfindung wird für die Erfassung der Temperatur ein galvanisch isolierter, temperaturabhängiger Widerstand mit guter thermischer Kopplung zu der Batterie, oder dem Akkumulator angebracht, der die Temperaturinformation zu dem im Power-Management-IC untergebrachten Ladecontroller 104 überträgt. Ein derartiger temperaturabhängiger Widerstand kann beispielsweise ein Widerstand mit negativem Temperaturkoeffizienten, ein sogenannter NTC-Widerstand sein.

Weiterhin kann die Ladeüberwachungsschaltung eine Zeitschaltvorrichtung aufweisen, sodass die Leistungsübertragung nach einer vorbestimmten Ladedauer beendet wird. Ein derartiges Begrenzen des Aufladevorgangs auf eine maximale Ladezeit bietet den Vorteil einer zusätzlichen Sicherung und damit einer erhöhten Zuverlässigkeit der Batterieladevorrichtung.

Beispielsweise ist ein durch ein RC-Glied gebildeter einstellbarer Oszillator, der die Zeitschaltung steuert, zum Begrenzen der maximalen Ladezeit vorgesehen. Alternativ können aber die Zeiten auch von der Netzfrequenz abgeleitet werden. Dann sind die Zeiten genauer als bei Verwendung des RC-Oszillators und der Aufwand in einem nachgeschalteten Frequenzteiler reduziert sich.

Die vorteilhaften Eigenschaften der erfindungsgemäßen Anordnung der Ladeüberwachungsschaltung auf der Primärseite der Batterieladevorrichtung kommen besonders dann zum Tragen, wenn es sich bei dem Schaltnetzteil um ein Schaltnetzteil handelt, das eine Hilfsspannung, die in einer an dem Transformator angeordneten Hilfswicklung erzeugt wird, zum Regeln des Ausgangsstroms und/oder der Ausgangsspannung des Schaltnetzteils verwendet. In vorteilhafter Weise kann dann die Ladeüberwachungsschaltung in der gleichen integrierten Schaltung realisiert werden, welche die Regelung und Ansteuerung des Schaltnetzteils durchführt. Dies reduziert die Anzahl der benötigten integrierten Schaltungen und erhöht damit auch die Zuverlässigkeit der Gesamtanordnung.

Um weiterhin neben dem Temperaturanstieg an der Batterie auch eine absinkende Sekundärspannung als Information für den erreichten Vollladezustand nutzen zu können, kann ein momentaner Istwert der Sekundärspannung, welcher der Batteriespannung entspricht, ermittelt werden und in der Logikschaltung abgespeichert werden. Überwacht man diesen Istwert, und reduziert sich der Momentanwert während mehrerer Abtastwerte, dann ist der Fall eines sogenannten -ΔU aufgetreten und nach Überschreiten eines vorgegebenen Wertes kann auf Ladeerhaltung umgeschaltet werden. Dieser momentane Istwert kann beispielsweise über eine Modulation des Arbeitspunktes auf der I/U-Kennlinie über die Steuerung der Ausschaltzeit des primärseitigen Schalters des Schaltnetzteils erfolgen.

Gemäß einer vorteilhaften Weiterbildung der vorliegenden Erfindung wird nach Erreichen des Vollladezustands der Batterie die Leistungszufuhr nicht vollständig abgeschaltet, sondern so eingestellt, dass ein geringfügiger Ladeerhaltungsstrom an die Batterie geliefert wird. Dies verhindert in vorteilhafter Weise, dass sich die Ladung der Batterie wieder reduziert.

Es ist bekannt, dass bei einer Aufladung von Bleiakkumulatoren die Lebensdauer der Batterien durch Einhalten einer sogenannten IU₀U-Kennlinie bei der Aufladung erhöht werden kann. Das heißt, zunächst wird mit einer relativ hohen Spannung die Batterie aufgeladen, und nach Absinken des Ladestroms wird bis zur Volladung mit einer reduzierten Spannung weitergeladen. Gemäß einer vorteilhaften Weiterbildung der vorliegenden Erfindung kann eine derartige IU₀U-Kennlinie durch die Ladeüberwachungsschaltung realisiert werden, wenn die Schaltfrequenz des primärseitigen Schalters des Sperrwandlers überwacht wird und bei einem Absinken der Frequenz die Ausgangsspannung entsprechend reduziert wird.

Anhand der in den beiliegenden Zeichnungen vorteilhaften Ausgestaltungen wird die Erfindung im Folgenden näher erläutert. Ähnliche oder korrespondierhände Einzelheiten des erfindungsgemäßen Gegenstands sind mit denselben Bezugszeichen versehen. Es zeigen:
- Figur 1: eine schematische Darstellung der erfindungsgemäßen Batterieladevorrichtung gemäß einer ersten Ausführungsform;
- Figur 2: eine schematische Darstellung der erfindungsgemäßen Batterieladevorrichtung gemäß einer zweiten vorteilhaften Ausführungsform;
- Figur 3: ein Blockdiagramm des allgemeinen Aufbaus einer Batterieladevorrichtung;
- Figur 4: ein weiteres Blockdiagramm des allgemeinsten Aufbaus einer Batterieladevorrichtung;
- Figur 5: ein Blockdiagramm einer Batterieladevorrichtung nach dem Stand der Technik.

Der Aufbau und die Wirkungsweise der erfindungsgemäßen Batterieladevorrichtung soll im Folgenden mit Bezug auf die Figuren genauer erläutert werden.

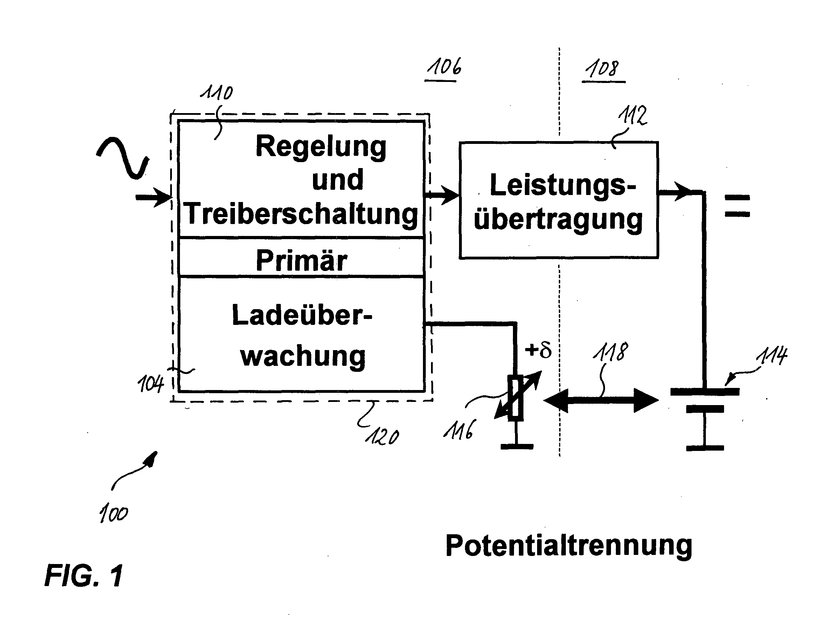

Wie in Figur 1 dargestellt, umfasst die erfindungsgemäße Batterieladevorrichtung 100 eine Primärseite 106 sowie eine Sekundärseite 108, die potentialmäßig voneinander getrennt sind.

Erfindungsgemäß sind auf der Primärseite 106 der Batterieladevorrichtung 100 sowohl die Regelungs- und Treiberschaltung 110 zur Ansteuerung der Leistungsübertragung 112 wie auch die Ladeüberwachungsschaltung 104 angeordnet. Dabei bedeutet die Leistungsübertragungsvorrichtung 112 üblicherweise einen Transformator, der die erforderliche Potentialtrennung von Primärseite 106 und Sekundärseite 108 beinhaltet.

Erfindungsgemäß befindet sich in direkter thermischer Kopplung mit der Batterie 114 ein Widerstand mit negativem Temperaturkoeffizienten, ein sogenannter NTC-Widerstand, 116. Die thermische Kopplung ist durch den Pfeil 118 symbolisiert und beinhaltet eine galvanisch getrennte Informationsübertragung von der Sekundärseite 108 auf die Primärseite 106. Die Temperaturinformation, die von dem NTC-Widerstand 116 geliefert wird, wird an die Ladeüberwachungsschaltung 104, die in dem sogenannten Power-Management-IC 120 zusammen mit der Regelungs- und Treiberschaltung 110 untergebracht ist, übertragen. Die Regelung der Leistungsübertragung kann dann auf der Basis dieser Information sowie zusätzlicher Information erfolgen. Erfindungsgemäß ist daher nur ein einziger IC 120 erforderlich, der Regelung und Ladeüberwachung beinhaltet und es kann daher die Schaltungskomplexität, die Gerätekosten und die Baugröße der Batterieladevorrichtung vermindert werden.

Außerdem kann durch die geringere Bauteileanzahl und den vollständigen Verzicht auf einen Optokoppler zur Übertragung der Information von der Sekundärseite 108 auf die Primärseite 106 die Gerätezuverlässigkeit deutlich erhöht werden.

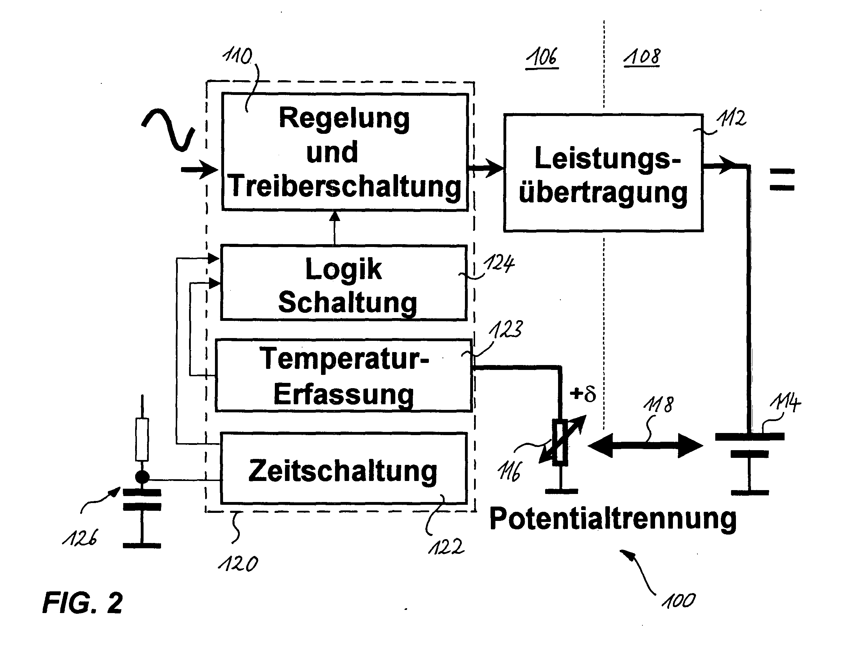

In dem Blockschaltbild der Figur 2 ist die erfindungsgemäße Batterieladevorrichtung 100 gemäß einer weiteren Ausführungsform im Detail dargestellt. Erfindungsgemäß umfasst die integrierte Schaltung 120 neben den Komponenten für die Stromspannungsregelung 110 eine programmierbare Zeitschaltung 122 zum Einstellen einer maximalen Ladezeit sowie eine Temperaturerfassungseinrichtung 123, die in Abhängigkeit eines vorbestimmten Grenzwerts der Maximaltemperatur und/oder einer vorher eingestellten Temperaturzunahme und/oder einer voreingestellten Temperaturanstiegsgeschwindigkeit den Ladevorgang beendet und auf einen geringen Erhaltungsladestrom umschaltet.

Die Temperaturüberwachungseinrichtung 123 ist mit einem Temperaturfühler, hier einem NTC-Widerstand 116, verbunden. Der Temperaturfühler 116 ist von der Sekundärseite 108 elektrisch durch eine geeignete Isolation, wie beispielsweise durch Umspritzen, Umhüllen, Vergießen oder dergleichen isoliert, für eine Wärmeübertragung jedoch, wie durch den Pfeil 118 symbolisiert, ausreichend thermisch gekoppelt. Eine Logikschaltung 124 führt die erforderlichen Logikoperationen durch und erlaubt die Voreinstellung der Parameter.

Obwohl im Vorangegangenen stets davon ausgegangen wurde, dass es sich bei dem Power-Management-IC 120 um eine integrierte Schaltung handelt, die beispielsweise als anwenderspezifischer IC (ASIC) hergestellt werden kann, ist klar, dass es sich bei der Schaltung 120 auch um eine diskret aufgebaute Schaltungsanordnung handeln kann.

Die Funktionsweise der erfindungsgemäßen Batterieladevorrichtung 100 nach Figur 2 soll im Folgenden näher erläutert werden.

Gemäß der vorliegenden Erfindung befinden sich auf de Sekundärseite 108 lediglich die Anschlüsse für die Batterie 114, die mittels der Leistungsübertragungseinrichtung 112 mit dem benötigten Ladestrom versorgt wird. Die Temperaturerfassung 123 ermittelt die Temperatur der Batterie oder des Akkumulators und schaltet bei Erreichen eines Maximalwertes auf einen Erhaltungsladungsbetrieb um.

Alternativ oder zusätzlich kann die Temperaturerfassungseinrichtung 123 auch eine vorgegebene Temperaturerhöhung oder das Erreichen eines repräsentativen Temperaturgradienten als Schwelle für das Beenden des eigentlichen Ladevorgangs verwenden. Dabei wird der maximale Ladestrom, der durch die I/U-Kennlinie des Leistungsteils gebildet ist, gepulst, um den benötigten kleineren Ladeerhaltungsstrom zu erzeugen.

Ein durch ein RC-Glied gebildeter einstellbarer Oszillator 126, der die Zeitschaltung 122 steuert, begrenzt die maximale Ladezeit. Alternativ können aber die Zeiten auch von der Netzfrequenz abgeleitet werden. Dann sind die Zeiten genauer als bei Verwendung des RC-Oszillators 126 und der Aufwand in einem nachgeschalteten Frequenzteiler reduziert sich.

Durch die Logikschaltung 124 werden die einzelnen Signale von der Temperaturerfassungseinrichtung 123 und der Zeitschaltung 122 verknüpft und an die Regelungs-und Treiberschaltung 110 zur Steuerung des Sperrwandlers ausgegeben.

Über eine Modulation des Arbeitspunktes auf der I/U-Kennlinie mittels einer Steuerung der Ausschaltzeit des primärseitigen Schalters des Schaltnetzteils kann ein momentaner Istwert der Sekundärspannung, welcher der Batteriespannung entspricht, ermittelt werden. Dieser Momentanwert wird in der Logikschaltung 124 abgespeichert. Reduziert sich dieser Momentanwert während mehrerer Abtastwerte, was einem negativen ΔU entspricht, und überschreitet einen vorgegebenen Wert, so veranlasst die Logikschaltung 124 ebenfalls die Regelungs- und Treiberschaltung 110 auf Ladehaltungsbetrieb umzuschalten.

Durch die Integration der Ladezustandsüberwachung in das Power-Management-IC auf der Primärseite kann auf ein zusätzlich sogenanntes Battery-Management-IC auf der Sekundärseite verzichtet werden und es wird damit eine Kostenreduzierung, eine Reduzierung des Platzbedarfs und eine Erhöhung der Zuverlässigkeit erreicht.

## Patentansprüche

1. Batterieladevorrichtung zum Aufladen einer Batterie,
wobei die Batterieladevorrichtung (100) ein primär gesteuertes Schaltnetzteil (102) mit mindestens einem Wandler, der mit einem primärseitigen Schaltkreis (106) und mit einem sekundärseitigen Schaltkreis (108) verbunden ist, mit einer Regelungs- und Treiberschaltung (110) zum Regeln der auf die Sekundärseite (108) übertragenen Leistung sowie eine Ladeüberwachungsschaltung (104) zum Überwachen eines Ladezustands der Batterie aufweist,
wobei die Ladeüberwachungsschaltung (104) in dem primärseitigen Schaltkreis (106) der Batterieladevorrichtung (100) angeordnet ist.

2. Batterieladevorrichtung nach Anspruch 2, wobei die Ladeüberwachungsschaltung (104) eine Temperaturerfassungseinrichtung (123) zum Erfassen der Temperatur der Batterie (114) umfasst und so ausgebildet ist, dass sie Leistungsübertragung in Antwort auf die gemessene Temperatur steuert.

3. Batterieladevorrichtung nach Anspruch 2, wobei die Temperaturerfassungseinrichtung (123) einen Widerstand mit negativem Temperaturkoeffizienten (116) aufweist, der gegenüber der Batterie (114) galvanisch isoliert ist.

4. Batterieladevorrichtung nach mindestens einem der vorangehenden Ansprüche, wobei die Ladeüberwachungsschaltung (104) eine Zeitschaltvorrichtung (122) aufweist, welche die Leistungsübertragung nach einer vorbestimmten Ladedauer beendet.

5. Batterieladevorrichtung nach Anspruch 4, wobei die Zeitschaltvorrichtung (122) eine Oszillatorschaltung (126) zum Erzeugen eines Zeittaktes aufweist.

6. Batterieladevorrichtung nach Anspruch 4, wobei die Zeitschaltvorrichtung (122) so ausgebildet ist, dass sie einen Zeittakt aus einer Netzfrequenz erzeugt.

7. Batterieladevorrichtung nach mindestens einem der vorangehenden Ansprüche, wobei das Schaltnetzteil (102) einen primärseitigen Schalter und einen Transformator mit einer Hilfswicklung, in der nach dem Öffnen des primärseitigen Schalters eine Hilfsspannung induziert wird, aufweist und wobei die Regelungs- und Treiberschaltung (110) so ausgebildet ist, dass sie die Ausgangsspannung und/oder den Ausgangsstrom des Schaltnetzteils in Abhängigkeit von der induzierten Hilfsspannung regelt.

8. Batterieladevorrichtung nach mindestens einem der vorangehenden Ansprüche, wobei die Batterieladevorrichtung weiterhin eine Logikschaltung (124) zum Abspeichern von Werten der Ausgangsspannung des Schaltnetzteils als momentane Istwerte der Batteriespannung und zum Vergleichen jeweils aufeinander folgender Istwerte aufweist, wobei die Logikschaltung (124) so ausgebildet ist, dass sie den Ladevorgang beendet, wenn sich der Istwert während mehrerer aufeinanderfolgender Abtastungen reduziert.

9. Batterieladevorrichtung nach mindestens einem der vorangehenden Ansprüche, wobei die Logikschaltung (124) so ausgebildet ist, dass sie nach dem Beenden des Ladevorgangs die Regelungs- und Treiberschaltung (110) dazu veranlasst, einen geringen Ladeerhaltungsstrom an die Batterie zu übertragen.

10. Batterieladevorrichtung nach mindestens einem der vorangehenden Ansprüche, wobei die Ladeüberwachungsschaltung (104) so ausgebildet ist, dass die Schaltfrequenz des primärseitigen Schalters überwacht und auf der Basis der ermittelten Schaltfrequenz die Regelungs- und Treiberschaltung (110) so an steuert, dass sich eine IU₀U-Ladekennlinie einstellt.
